# EUROPÄISCHE PATENTSCHRIFT

(11) **EP 1 589 281 B1**
(45) Veröffentlichungstag und Bekanntmachung des Hinweises auf die Patenterteilung: **14.01.2009**
(21) Anmeldenummer: 05007158.8
(22) Anmeldetag: 01.04.2005
(51) Int. Cl.: F21S 8/00, F21V 8/00, F21Y 103/00, F21Y 101/02

(54) **LED-Röhren-Hybridbeleuchtungseinrichtung.**
Hybrid lighting device with fluorescent tube and LED.
Dispositif d'éclairage hybride à LED et tube fluorescent

(30) Priorität: 24.04.2004 DE 102004020122
(43) Veröffentlichungstag der Anmeldung: 26.10.2005
(73) Patentinhaber: Diehl Aerospace GmbH, 88662 Überlingen (DE)
(72) Erfinder: Klettke, Oliver, 90482 Nürnberg (DE)
(74) Vertreter: Diehl Patentabteilung

(56) Entgegenhaltungen:
- EP-A- 1 293 382
- DE-A1- 10 065 020
- DE-U1- 20 211 305
- US-A- 5 555 161
- US-B1- 6 203 180
- US-B1- 6 250 786

## Beschreibung

Die Erfindung bezieht sich auf eine Beleuchtungseinrichtung mit einer Leuchtstofflampe (oder Röhre) und mindestens einer Leuchtdiode (oder LED), die zur Innenraumbeleuchtung in einem Fahrzeug, insbesondere in einem Passagierflugzeug, vorgesehen ist.

Zur Ausleuchtung des Innenraumes eines Flugzeuges werden bislang überwiegend Leuchtstofflampen eingesetzt. Der Einsatz von Leuchtstofflampen ist insofern vorteilhaft, als damit weißes Licht mit einem für das menschliche Auge angenehmen Frequenzspektrum mit besonders hoher Lichtausbeute erzeugt werden kann. Der Vorteil einer hohen Lichtausbeute ist insbesondere bei der Innenraumbeleuchtung eines Flugzeuges von großer Bedeutung, zumal hier einerseits der für Beleuchtungskörper zur Verfügung stehende Raum erheblich eingeschränkt ist. Die beengten Platzverhältnisse sowie die notwendigerweise gute Isolierung der Fahrgastkabine eines Passagierflugzeuges führen andererseits dazu, dass die von der Beleuchtung erzeugte Verlustwärme nur vergleichsweise schlecht abgeführt wird.

Bei ausschließlichem Einsatz von Leuchtstofflampen ist es jedoch andererseits kaum möglich, die Helligkeit der Innenraumbeleuchtung zu verändern oder ihr Farbspektrum zu variieren. Dies wird vielfach als nachteilig empfunden. Bei der Konzeption einer modernen Beleuchtungseinrichtung wird insbesondere in der Luftfahrttechnik zunehmend häufig die Erkenntnis ausgenützt, dass durch Anpassung der Innenraumbeleuchtung an die Tagessituation die Stimmung und damit das Wohlbefinden der Fluggäste, insbesondere bei langen Interkontinentalflügen, positiv beeinflussbar ist. Derartige Beleuchtungskonzepte werden auch unter dem Begriff "mood-lighting" zusammengefasst. So hat beispielsweise eine Innenraumbeleuchtung mit hohem Blau-Anteil eine beruhigende Wirkung und kann somit die Erholung der Fluggäste während eines Nachtfluges fördern. Ebenso kann eine kontinuierliche und langsame Änderung der Beleuchtungsstimmung, die z. B. der während eines Sonnenaufgangs oder Sonnenuntergangs erfolgenden Lichtänderung nachempfunden ist, wünschenswert sein.

Um eine derartige Variation der Beleuchtung zu ermöglichen, werden zum Zweck der Innenraumbeleuchtung eines Flugzeuges in zunehmenden Maße Leuchtdioden eingesetzt. Eine Leuchtdiode hat jedoch an sich gegenüber einer Leuchtstofflampe den Nachteil einer vergleichsweise geringen Helligkeit und einer vergleichsweise hohen Verlustleistung, die als Wärme abgeführt wird. Die jeweiligen Vorteile von Leuchtstofflampen und Leuchtdioden werden durch Einsatz einer Hybridbeleuchtung synergetisch genützt, bei der ein weißer Grundlichtanteil durch Leuchtstofflampen erzeugt wird, und dessen Farbspektrum mittels farbiger Leuchtdioden modifiziert wird. Eine solche Hybridbeleuchtung ist jedoch häufig vergleichsweise platzaufwendig und deshalb gerade in einem Flugzeug nur begrenzt einsetzbar.

Aus der DE 100 65 020 A1 ist ein Fahrzeugscheinwerfer bekannt, bei dem das Licht einer Leuchtdiode über ein Lichtleitelement, an einer reflektierenden Beschichtung des Lichtleitelements-reflektiert und aus einer Lichtaustrittsfläche des Lichtleitelements austretend, auf einen Reflektor hinter einer Gasentladungslampe geworfen und, an diesem Reflektor reflektiert, in die Lichtaustrittsrichtung des Scheinwerfers umgelenkt wird, um zumindest teilweise die Funktion eines Fahrzeugbegrenzungslichts zu erfüllen.

In der US 6,250,786 B1 ist ein Fahrzeugscheinwerfer beschrieben, bei welchem als vor dem Reflektor angeordnete Lichtquelle eine länglich ausgebildete Leuchtstoffröhre Verwendung findet.

Der Erfindung liegt die Aufgabe zugrunde, eine für die Innenraumbeleuchtung eines Fahrzeuges vorgesehene Hybridbeleuchtungseinrichtung mit einer Leuchtstofflampe und mindestens einer Leuchtdiode anzugeben, die platzsparend realisiert ist und vorteilhafte Betriebseigenschaften aufweist.

Diese Aufgabe wird gelöst durch die Merkmale des Anspruchs 1. Danach ist vorgesehen, die mindestens eine Leuchtdiode, in Hauptleuchtrichtung gesehen, hinter der als Röhre ausgebildeten Leuchtstofflampe anzuordnen und das von der Leuchtdiode erzeugte Licht mittels eines Lichtleitelements an der Leuchtstofflampe vorbeizuleiten, so dass dieses Farblicht im Wesentlichen in Hauptleuchtrichtung abgestrahlt wird. Als Hauptleuchtrichtung ist dabei diejenige Richtung bezeichnet, in welche aufgrund der Konstruktion der Beleuchtungseinrichtung das von dieser erzeugte Licht bevorzugt abgestrahlt wird. Wird von der Beleuchtungseinrichtung ein im wesentlichen rotationssymmetrischer oder flächensymmetrischer Lichtkegel erzeugt, so ist die Hauptleuchtrichtung insbesondere durch die Symmetrieachse dieses Lichtkegels gegeben.

Durch die Hintereinanderanordnung der Leuchtstofflampe und der mindestens einen Leuchtdiode wird eine sehr schmale Bauform der Beleuchtungseinrichtung ermöglicht, die insbesondere zum Einsatz in einem Flugzeug besonders geeignet ist. Zudem legt das von der Leuchtdiode erzeugte Licht innerhalb des Lichtleitelements eine vergleichsweise lange Strecke zurück, bis es in den zu beleuchtenden Innenraum austritt. Dies ist vor allem von Vorteil, wenn mehrere, insbesondere verschiedenfarbige Leuchtdioden in der Beleuchtungseinrichtung vorgesehen sind, zumal sich das Licht der Leuchtdioden bereits innerhalb des Lichtleitelements mischt, so dass eine fleckige, "unruhige" Innenraumbeleuchtung vermieden ist.

Eine besonders gleichmäßige Beleuchtung wird in einer dabei gleichzeitig besonders platzsparenden Ausführungsform der Erfindung erzielt, bei welcher das Lichtleitelement als bezüglich der Hauptleuchtrichtung im wesentlichen symmetrische und in Hauptleuchtrichtung geöffnete Hohlform ausgebildet ist, in welcher die Leuchtstofflampe zumindestens teilweise aufgenommen ist. Die symmetrische Ausbildung der Beleuchtungseinrichtung hat den weiteren Vorteil, dass eine einzige Bauform der Beleuchtungseinrichtung auf beiden Seiten der Fahrgastkabine eines Flugzeuges eingesetzt werden kann. Im Gegensatz zu einer unsymmetrischen Lösung, bei welcher stets zwei spiegelbildliche Varianten hergestellt und bevorratet werden müssen, können somit Herstellungs- und Lagerkosten eingespart werden.

Bevorzugt wird eine Leuchtstofflampe verwendet, die in der üblichen Form einer langgestreckten, geraden Röhre realisiert ist. Insbesondere an diese Form der Leuchtstofflampe ist ein Lichtleitelement angepaßt, dass im wesentlichen die Form eines Hohlzylindersegmentes, d.h. eines der Länge nach aufgeschnittenen Hohlzylinders aufweist. Bevorzugt beträgt der Öffnungswinkel dieses Hohlzylindersegmentes etwa 180°, so dass das Lichtleitelement im wesentlichen die Form eines der Länge nach halbierten Hohlzylinders annimmt. Variationen des Lichtleitelementes zu größeren oder kleineren Öffnungswinkeln können jedoch in Anpassung an eine bestimmte Beleuchtungsgeometrie vorteilhaft sein.

Um eine gute Einkopplung des von der Leuchtdiode ausgestrahlten Lichts in das Lichtleitelement sicherzustellen, ist letzteres bevorzugt mit einer oder mehreren Aufnahmen versehen, in die jeweils eine Leuchtdiode mit ihrem lichtemittierenden Ende eingesetzt ist. Ist das Lichtleitelement symmetrisch zur Hauptleuchtrichtung aufgebaut, so ist zweckmäßigerweise auch die Aufnahme bezüglich der Symmetrieachse des Lichtleitelementes zentriert. Eine effektive und symmetrische Einkopplung des von der Leuchtdiode erzeugten Lichts in das Lichtleitelement wird des weiteren bevorzugt durch die Verwendung einer sogenannten "Side-Emitter"-Leuchtdiode erzielt. Hierunter wird eine spezielle Bauform einer Leuchtdiode verstanden, bei welcher der überwiegende Anteil des erzeugten Lichts nicht in die zur Kontaktseite der Leuchtdiode diametral entgegengesetzte Richtung, sondern seitlich, und damit im wesentlichen rechtwinklig zu der Hauptleuchtrichtung abgestrahlt wird.

Bevorzugt umfaßt die Beleuchtungseinrichtung mehrere Leuchtdioden, die parallel zu einer Längsachse des Lichtleitelementes aufgereiht angeordnet sind. Um bezüglich des erzielbaren Farbspektrums eine besonders große Variationsbreite zu haben, werden dabei vorteilhafterweise verschiedenfarbige Leuchtdioden eingesetzt, wobei die verschiedenen Farben jeweils alternierend zueinander angeordnet sind.

Um eine longitudinale Lichtausbreitung innerhalb des Lichtleitelementes bestmöglich zu unterdrücken, und damit sicherzustellen, dass ein möglichst großer Anteil des von den Leuchtdioden erzeugten Lichts über die vorgesehene Lichtaustrittsfläche des Lichtleitelements in den zu beleuchtenden Innenraum eingestrahlt wird, ist vorteilhafterweise zwischen benachbarten Leuchtdioden eine Leitstruktur in das Lichtleitelement eingebracht. Eine solche Leitstruktur ist insbesondere durch eine Unterbrechung des Lichtleitelements realisierbar, die derart geformt ist, dass das in Longitudinalrichtung innerhalb des Lichtleitelementes propagierende Licht in Totalreflexion in Richtung einer Lichtaustrittsfläche abgelenkt wird.

Zur weiteren Effizienzsteigerung der Beleuchtungseinrichtung ist in einer Ausführung der Erfindung vorgesehen, die Innenfläche des Lichtleitelementes, z. B. durch eine reflektierende Beschichtung, als Reflektor für das von der Leuchtstofflampe erzeugte Licht auszubilden.

Eine vergleichsweise gute Wärmeankopplung der oder jeder Leuchtdiode wird zweckmäßigerweise dadurch erzielt, dass die oder jede Leuchtdiode auf einem metallischen Trägerelement der Beleuchtungseinrichtung aufgebaut ist.

Das Lichtleitelement besteht zweckmäßigerweise aus Polycarbonat, zumal dieses Material sowohl im Hinblick auf seine Transparenz als auch im Hinblick auf seine Beständigkeit gegenüber der bei Einsatz in einem Flugzeug typischerweise auftretenden Wärme- und UV-Strahlungsbelastung besonders geeignet ist.

Nachfolgend wird ein Ausführungsbeispiel der Erfindung anhand einer Zeichnung näher erläutert. Darin zeigen:
- Fig. 1: in einem schematischen Querschnitt eine Beleuchtungseinrichtung mit einer Leuchtstofflampe, einer Leuchtdiode (LED) und einem Lichtleitelement und
- Fig. 2: in Draufsicht auf die Frontseite das Lichtleitelement gemäß Fig. 1.

Einander entsprechende Teile und Größen sind in den Figuren mit den gleichen Bezugszeichen versehen.

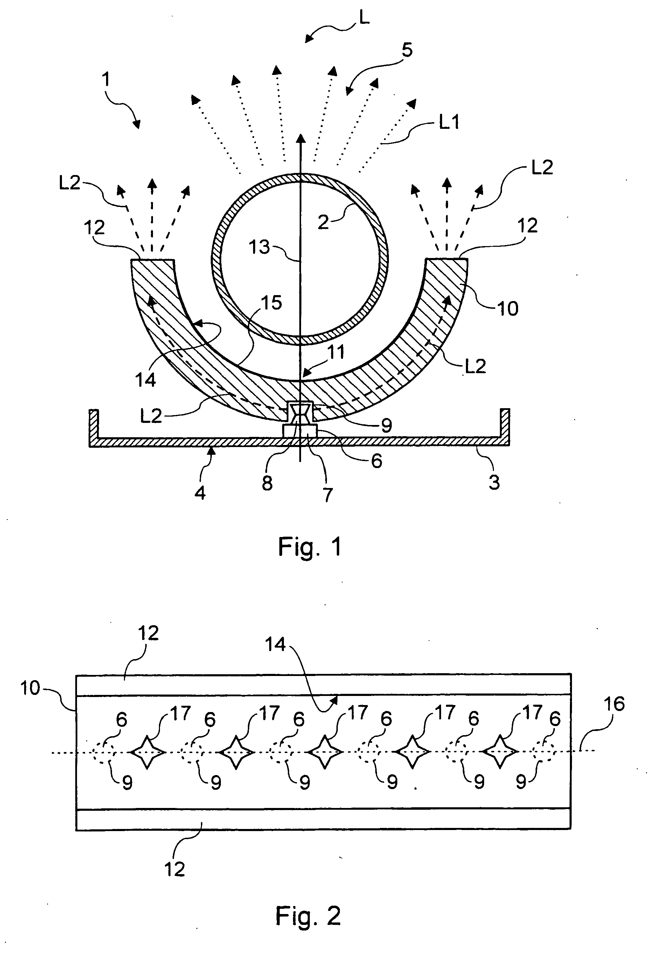

Die in Fig. 1 dargestellte Beleuchtungseinrichtung 1 umfasst eine in der Form einer geraden, langgestreckten Röhre ausgebildete Leuchtstofflampe 2, die an beiden Längsenden mittels (nicht dargestellter) Halterungen kontaktiert und mit Abstand an einer Trägerplatte 3 befestigt ist. Die von der Leuchtstofflampe 2 abgewandte Fläche der Trägerplatte 3 ist nachfolgend als Rückseite 4 bezeichnet. Entsprechend ist die Leuchtstofflampe 2 somit an der Frontseite 5 der Beleuchtungseinrichtung 1 angeordnet.

Die Beleuchtungseinrichtung 1 umfasst weiterhin eine Anzahl von Leuchtdioden 6, die mit Abstand zueinander längs der Leuchtstofflampe 2 aufgereiht sind (s. Fig. 2). Jede Leuchtdiode 6 ist mit ihrem Kontaktende 7 auf der der Leuchtstofflampe 2 zugekehrten Fläche der Trägerplatte 3 aufgebaut und somit zwischen der Trägerplatte 3 und der Leuchtstoffröhre 2 angeordnet. Das lichtemittierende Ende 8 einer jeden Leuchtdiode 6 ist dabei in einer Aufnahme 9 eingebettet, die in ein ebenfalls zwischen der Trägerplatte 3 und der Leuchtstofflampe 2 angeordnetes Lichtleitelement 10 aus transparentem Kunststoff, insbesondere Polycarbonat, eingebracht ist. Das Lichtleitelement 10 hat die Form eines der Länge nach halbierten Hohlzylinders und ist derart angeordnet, dass es die Leuchtstofflampe 2 halbseitig und etwa koaxial umgibt. Auch das Lichtleitelement 10 ist mittels (nicht dargestellter) Befestigungsteile an der Trägerplatte 3 gehaltert.

Das Lichtleitelement 10 hat somit, im Querschnitt gesehen, im Wesentlichen die Form eines Buchstaben "U", dessen Boden oder Scheitel 11 der Trägerplatte 3 zugewandt ist, und dessen offenes Ende zur Frontseite 5 hin ausgerichtet ist. Die Endflächen der "U"-Schenkel des Lichtleitelementes 10 dienen dabei als Lichtaustrittsflächen 12. Die Aufnahme 9 ist zentriert bezüglich der Lichtaustrittsflächen 12 im Scheitel 11 angeordnet.

Insgesamt ist die Beleuchtungseinrichtung 1 symmetrisch bezüglich der durch die Achse der Leuchtstofflampe 2 gezogenen Flächennormalen auf die Trägerplatte 3 ausgebildet. Diese Symmetrieachse bildet gleichzeitig die Hauptleuchtrichtung 13 der Beleuchtungseinrichtung 1. Das von der Beleuchtungseinrichtung 1 ausgestrahlte Licht L wird symmetrisch bezüglich dieser Hauptleuchtrichtung 13 in Richtung der Frontseite 5 ausgestrahlt.

Im Betrieb der Beleuchtungseinrichtung 1 wird mittels der Leuchtstofflampe 2 ein weißes Grundlicht L1 mit einer sonnenlichtähnlichen Spektralverteilung erzeugt. Um die Abstrahlung des von der Leuchtstofflampe 2 erzeugten Grundlichts L1 in Hauptleuchtrichtung 13 zu optimieren, d.h. um Streulichtverluste zu minimieren, ist die Innenfläche 14 des Lichtleitelementes 10 mit einer reflektierenden Schicht 15 beschichtet, so dass das Lichtleitelement 10 für die Leuchtstofflampe 2 einen wirksamen Reflektor bildet.

Mittels der Leuchtdioden 6 kann dem Grundlicht L1 farbiges Licht (im Folgenden Farblicht L2) überlagert werden, um die spektrale Zusammensetzung des von der Beleuchtungseinrichtung 1 insgesamt abgegebenen Lichts L zu modifizieren. Die Leuchtdioden 6 sind derart ausgebildet, dass sie einen Großteil des Farblichts L2 senkrecht zu ihrer Symmetrieachse, und damit senkrecht zu der Hauptleuchtrichtung 13 in einer ringförmigen Abstrahlcharakteristik abgegeben. Das von den Leuchtdioden 6 abgegebene Farblicht L2 wird an der Wand der Aufnahme 9 in das Lichtleitelement 10 eingespeist und entlang der Krümmung des Lichtleitelements 10 tangential zu beiden Seiten der Leuchtstofflampe 2 um diese herumgeführt und tritt aus beiden Austrittsflächen 12 des Lichtleitelementes 10 in Richtung der Hauptleuchtrichtung 13 aus.

In Fig. 2 ist das Lichtleitelement 10 nochmals in Draufsicht auf die Frontseite 5 dargestellt. In dieser Darstellung ist insbesondere erkennbar, dass die Leuchtdioden 6 linear in Längsrichtung 16 des Lichtleitelementes 10 aneinandergereiht sind. Bevorzugt werden verschiedenfarbige Leuchtdioden 6 eingesetzt, insbesondere in den Farben rot, grün und blau, wobei die Leuchtdioden der verschiedenenen Farben jeweils alternierend in das Lichtleitelement 10 eingesetzt sind. Auf diese Weise wird erreicht, dass das von benachbarten Leuchtdioden 6 ausgehende, zunächst verschiedenfarbige Farblicht L2 sich noch innerhalb des Lichtleitelementes 10 mischt. Durch individuelle Ansteuerung der roten, grünen und blauen Leuchtdioden kann nun die spektrale Zusammensetzung des Farblichts L2 variiert werden, wodurch auch das Farbspektrum des insgesamt von der Beleuchtungseinrichtung 1 abgegebenen Lichts L modifiziert wird.

Um eine Ausbreitung des von den Leuchtdioden 6 in das Lichtleitelement 10 eingespeisten Farblichts L2 entlang der Längsrichtung 16 zu unterdrücken, ist zwischen je zwei Aufnahmen 6 eine Lichtleitstruktur 17 in Form eines sternförmigen Durchbruchs in das Lichtleitelement 10 eingebracht. Durch diese Lichtleitstruktur 17 wird das in longitudinaler Richtung in das Lichtleitelement 10 eingespeiste Farblicht L2 in Totalreflexion quer zur Längsrichtung 16, und somit in Richtung der nächstgelegenen Lichtaustrittsfläche 12 abgelenkt.

### Bezugszeichenliste

- 1: Beleuchtungseinrichtung
- 2: Leuchtstofflampe
- 3: Trägerplatte
- 4: Rückseite
- 5: Frontseite
- 6: Leuchtdiode (LED)
- 7: Kontaktende
- 8: (lichtemittierendes) Ende
- 9: Aufnahme
- 10: Lichtleitelement
- 11: Scheitel
- 12: Lichtaustrittsfläche
- 13: Hauptleuchtrichtung
- 14: Innenfläche
- 15: (reflektierende) Schicht
- 16: Längsrichtung
- 17: Lichtleitstruktur

- L: Licht
- L1: Grundlicht
- L2: Farblicht

## Patentansprüche

1. Beleuchtungseinrichtung (1) zur Innenraumbeleuchtung in einem Fahrzeug mit einer als Röhre ausgebildeten Leuchtstofflampe (2) und mindestens einer, in Richtung einer Hauptleuchtrichtung (13) gesehen, hinter der Leuchtstofflampe (2) angeordneten Leuchtdiode (6) sowie mit einem Lichtleitelement (10), welches dazu ausgebildet ist, das von der Leuchtdiode (6) ausgestrahlte Licht (L2) an der Leuchtstofflampe (2) vorbeizuleiten und im Wesentlichen in die Hauptleuchtrichtung (13) abzustrahlen.

2. Beleuchtungseinrichtung (1) nach Anspruch 1,
**dadurch gekennzeichnet,**
**dass** das Lichtleitelement (10) als bezüglich der Hauptleuchtrichtung (13) im Wesentlichen symmetrische, in Hauptleuchtrichtung (13) geöffnete Hohlform ausgebildet ist, in welcher die Leuchtstofflampe (2) zumindestens teilweise aufgenommen ist.

3. Beleuchtungseinrichtung (1) nach Anspruch 2,
**dadurch gekennzeichnet,**
**dass** das Lichtleitelement (10) im Wesentlichen die Form eines Hohlzylindersegmentes aufweist.

4. Beleüchtungseinnchtung (1) nach einem der Ansprüche 1 oder 3,
**dadurch gekennzeichnet,**
**dass** das lichtemittierende Ende (8) der Leuchtdiode (6) in einer Aufnahme (9) des Lichtleitelements (10) eingebettet ist.

5. Beleuchtungseinrichtung (1) nach einem der Ansprüche 1 bis 4,
**dadurch gekennzeichnet,**
**dass** die Leuchtdiode (6) derart ausgebildet und ausgerichtet ist, dass sie einen überwiegenden Anteil des von ihr erzeugten Lichtes (L2) quer zur Hauptleuchtrichtung (13) abgibt.

6. Beleuchtungseinrichtung (I) nach einem der Ansprüche 1 bis 5,
**gekennzeichnet durch**
mehrere entlang einer Längsrichtung (16) des Lichtleitelements (10) angeordnete Leuchtdioden (6).

7. Beleuchtungseinrichtung (1) nach Anspruch 6,
**dadurch gekennzeichnet,**
**dass** zwei benachbart angeordnete Leuchtdioden (6) eine unterschiedliche Farbe aufweisen.

8. Beleuchtungseinrichtung (1) nach Anspruch 6 oder 7,
**dadurch gekennzeichnet,**
**dass** zwischen zwei benachbart angeordneten Leuchtdioden (6) mindestens eine Lichtleitstruktur (17) zur Unterdrückung einer longitudinalen Lichtausbreitung in dem Lichtleitelement (10) eingebracht ist.

9. Beleuchtungseinrichtung (1) nach einem der Ansprüche 1 bis 8,
**dadurch gekennzeichnet,**
**dass** eine Innenfläche (14) des Lichtleitelements (10) als Reflektor für das von der Leuchtstofflampe (2) erzeugte Licht (L1) ausgebildet ist.

10. Beleuchtungseinrichtung (1) nach einem der Ansprüche 1 bis 8,
**dadurch gekennzeichnet,**
**dass** die oder jede Leuchtdiode (6) auf einer metallischen Trägerplatte (3) aufgebaut ist.

11. Beleuchtungseinrichtung (1) nach einem der Ansprüche 1 bis 9,
**dadurch gekennzeichnet,**
**dass** das Lichtleitelement (10) aus Polycarbonat besteht.

## Claims

1. Lighting device (1) for interior lighting in a vehicle, having a fluorescent lamp (2) designed as a tube, and at least one light-emitting diode (6) arranged downstream of the fluorescent lamp (2) when seen in a main lighting direction (13), and having a light-guiding element (10) which is designed to guide the light (L2) emitted by the light-emitting diode (6) past the fluorescent lamp (2) and to radiate it substantially in the main lighting direction (13).

2. Lighting device (1) according to Claim 1, **characterized in that** the light-guiding element (10) is designed as a hollow which is substantially symmetrical with reference to the main lighting direction (13) and open in the main lighting direction (13) and in which the fluorescent lamp (2) is at least partially found.

3. Lighting device (1) according to Claim 2, **characterized in that** the light-guiding element (10) substantially has the form of a hollow cylindrical segment.

4. Lighting device (1) according to either of Claims 1 and 3, **characterized in that** the light-emitting end (8) of the light-emitting diode (6) is embedded in a holder (9) of the light-guiding element (10) .

5. Lighting device (1) according to one of Claims 1 to 4, **characterized in that** the light-emitting diode (6) is designed and aligned in such a way that it outputs a predominant fraction of the light (L2) produced by it in a fashion transverse to the main lighting direction (13).

6. Lighting device (1) according to one of Claims 1 to 5, **characterized by** a number of light-emitting diodes (6) arranged along a longitudinal direction (16) of the light-guiding element (10).

7. Lighting device (1) according to Claim 6, **characterized in that** two adjacently arranged light-emitting diodes (6) exhibit a different colour.

8. Lighting device (1) according to Claim 6 or 7, **characterized in that** at least one light-guiding structure (17) for suppressing a longitudinal light propagation in the light-guiding element (10) is introduced between two adjacently arranged light-emitting diodes (6).

9. Lighting device (1) according to one of Claims 1 to 8, **characterized in that** an inner surface (14) of the light-guiding element (10) is designed as a reflector for the light (L1) produced by the fluorescent lamp (2).

10. Lighting device (1) according to one of Claims 1 to 8, **characterized in that** the or each light-emitting diode (6) is mounted on a metallic supporting plate (3).

11. Lighting device (1) according to one of Claims 1 to 9, **characterized in that** the light-guiding element (10) consists of polycarbonate.

## Revendications

1. Dispositif d'éclairage hybride (1) pour l'éclairage de l'espace interne dans un véhicule comprenant une lampe fluorescente (2) réalisée en forme de tube, et au moins une diode luminescente (6) disposée derrière la lampe fluorescente (2), vu dans le sens d'une direction d'éclairage principale (13), ainsi qu'un élément guide de lumière (10) qui est réalisé de manière à guider la lumière (L2) émise par la diode luminescente (6) devant la lampe fluorescente (2) et à l'envoyer essentiellement dans la direction d'éclairage principale (13).

2. Dispositif d'éclairage (1) selon la revendication 1,
**caractérisé en ce que**
l'élément guide de lumière (10) est réalisé sous forme de moule creux ouvert dans la direction d'éclairage principale (13), essentiellement symétrique par rapport à la direction d'éclairage principale (13), dans lequel la lampe fluorescente (2) est reçue au moins en partie.

3. Dispositif d'éclairage (1) selon la revendication 2,
**caractérisé en ce que**
l'élément guide de lumière (10) présente essentiellement la forme d'un segment de cylindre creux.

4. Dispositif d'éclairage (1) selon l'une quelconque des revendications 1 ou 3,
**caractérisé en ce que**
l'extrémité (8) émettant la lumière de la diode luminescente (6) est noyée dans un logement (9) de l'élément guide de lumière (10).

5. Dispositif d'éclairage (1) selon l'une quelconque des revendications 1 à 4,
**caractérisé en ce que**
la diode luminescente (6) est réalisée et orientée de telle sorte qu'elle délivre une proportion principale de la lumière (L2) qu'elle produit transversalement à la direction d'éclairage principale (13).

6. Dispositif d'éclairage (1) selon l'une quelconque des revendications 1 à 5,
**caractérisé par**
plusieurs diodes luminescentes (6) disposées le long d'une direction longitudinale (16) de l'élément guide de lumière (10).

7. Dispositif d'éclairage (1) selon la revendication 6,
**caractérisé en ce que**
deux diodes luminescentes adjacentes (6) présentent une couleur différente.

8. Dispositif d'éclairage (1) selon la revendication 6 ou 7,
**caractérisé en ce que**
l'on monte entre deux diodes luminescentes adjacentes (6) au moins une structure de guide de lumière (17) pour supprimer une propagation de la lumière longitudinale dans l'élément guide de lumière (10).

9. Dispositif d'éclairage (1) selon l'une quelconque des revendications 1 à 8,
**caractérisé en ce**
**qu'**une surface interne (14) de l'élément guide de lumière (10) est réalisée sous forme de réflecteur pour la lumière (L1) produite par la lampe fluorescente (2).

10. Dispositif d'éclairage (1) selon l'une quelconque des revendications 1 à 8,
**caractérisé en ce que**
la ou chaque diode luminescente (6) est montée sur une plaque support métallique (3).

11. Dispositif d'éclairage (1) selon l'une quelconque des revendications 1 à 9,
**caractérisé en ce que**
l'élément guide de lumière (10) se compose de polycarbonate.
